# EUROPEAN PATENT APPLICATION

(11) **EP 1 313 275 A1**
(43) Date of publication of application: **21.05.2003**
(21) Application number: 02253947.2
(22) Date of filing: 06.06.2002
(51) Int. Cl.: H04L 12/56

(54) **A multi-priority re-sequencing method and apparatus**

(30) Priority: 16.11.2001 US 4023
(71) Applicant: LUCENT TECHNOLOGIES INC., Murray Hill, New Jersey 07974-0636 (US)
(72) Inventor: Hu, Teck H., Budd Lake, New Jersey 07828 (US); Rudrapatna, Ashok N., Basking Ridge, New Jersey 07920 (US)
(74) Representative: Watts, Christopher Malcolm Kelway, Dr.

(57) **Abstract**

In the multi-priority re-sequencing method and apparatus, received data packets each have a priority class indicator and a transmission sequence number. The priority class indicator indicates a priority class of the data packet, and the transmission sequence number indicates a sequence of transmission for data packets of a same priority class. The received data packets are sent to the next processing layer in sequence based on the transmission sequence number and the priority class indicator of the data packets.

## Description

### BACKGROUND OF THE INVENTION

### 1. Field of the Invention

The present invention relates to next generation wireless communication; and more particularly, re-sequencing of received data packets having different priorities.

### 2. Description of Related Art

Next generation wireless packet data systems will have to support multiple classes of services, each of which may require different priority treatment or quality of service requirements. For example, an in band priority class indicator (PCI) has been proposed for High Speed Downlink Packet Access (HSDPA) to differentiate between the priority of logical channels multiplexed in the same transport channel. It is expected that transmitting data packets having different priority classes will result in re-sequencing issues at the receive side. Namely, even though data packets of a given priority class are transmitted in order, data packets of the given priority class will be received out of order on the receive side. In addition, data packets of other priority classes will be received interspersed with the receipt of data packets for the given priority class. It has also been proposed with HSDPA that an in-band transmission sequence number (TSN) be provided with data packets for the re-sequencing functionality on the received side. However, a need exists for a methodology to re-sequence the data packets according to transmission order and priority class.

### SUMMARY OF THE INVENTION

The present invention provides for re-sequencing of data packets having different priority classes.

In one embodiment, the data packets transmitted by a base station are assigned a priority class indicator (PCI) and a transmission sequence number (TSN). The PCI indicates the priority class of the data packet. The transmission sequence number indicates the sequence of transmission for data packets of the same priority class. At the user equipment, buffers for each priority class are provided. Received data packets are placed into the appropriate buffer based on their PCI. The buffers then output the data packets in sequence based on their TSNs.

In another embodiment, the bases station uses a single sequence of TSNs for the data packets, regardless of class. At the user equipment, a single buffer stores the received data packets and outputs the data packets in sequence based on their TSNs.

In a further embodiment, the base station assigns PCIs and TSNs to the data packets. The TSN indicates the sequence of transmission for data packets of the same priority class. At the user equipment, a single buffer stores the received data packets. In outputting the data packets, both the PCI and TSN are examined such that the data packets of each PCI are output in sequence based on their TSNs, regardless of the TSNs of data packets for other PCIs.

### BRIEF DESCRIPTION OF THE DRAWINGS

The present invention will become more fully understood from the detailed description given herein below and the accompanying drawings which are given by way of illustration only, wherein like reference numerals designate corresponding parts in the various drawings, and wherein:
Fig. 1 illustrates a logical block diagram of a transmit and receive system employing a re-sequencing methodology according to a first embodiment of the present invention;
Fig. 2 illustrates a logical block diagram of a transmit and receive system employing a re-sequencing methodology according to a second embodiment of the present invention; and
Fig. 3 illustrates a logical block diagram of a transmit and receive system employing a re-sequencing methodology according to a third embodiment of the present invention.

### DETAILED DESCRIPTION OF THE PREFERED EMBODIMENTS

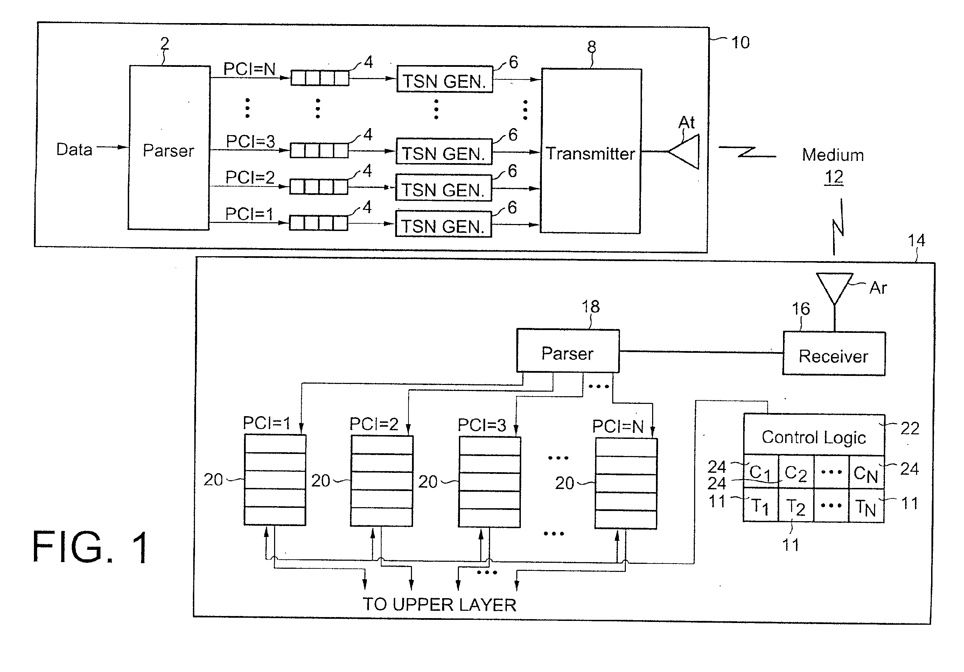

Fig. 1 illustrates a logical block diagram of a transmit and receive system employing a re-sequencing methodology according to a first embodiment of the present invention. As shown, a base station 10 transmits data packets over a medium 12 to user equipment 14. The base station 10 includes a parser 2 that receives data packets for transmission from other base station circuitry, not shown for the sake of brevity and clarity. The data packets represent one or more logical channels, and have been assigned a priority class. Specifically, each data packet includes a priority class indicator (PCI) indicating the priority class (1 through N) of the data packet. In one embodiment, the PCI is disposed in a header portion of the data packet.

The parser 2 parses the data packets into one of N buffers 4 based on the PCI of the data packet. A buffer 4 is provided for, and associated with, a different one of the N priority classes; hence, N buffers 4 are provided. For example, the parser 2 outputs data packets having a PCI of 1 to the buffer 4 associated with priority class 1, outputs data packets having a PCI of 2 to the buffer 4 having a priority class of 2, etc.

A transmission sequence number (TSN) generator 6 is associated with each one of the buffers 4; accordingly, there are N TSN generators. Each TSN generator 6 receives the data packets output from the associated buffer 4, and assigns a TSN to the data packet. Specifically, the TSN is disposed in a predetermined position in the data packet. For example, in one embodiment, the TSN forms part of the header for the data packet.

After assigning a TSN to a data packet, the TSN generator 6 increments the TSN, and this new TSN value will be assigned to the next, received data packet. In a preferred embodiment, the TSN generators 6 begin by assigning a TSN of 1, and increment the TSN by 1.

Because a TSN generator 6 is associated with each buffer 4, the data packets of a particular priority class have TSNs that are independent of the TSNs assigned to data packets of other priority classes. As a result, two data packets of different classes can have the same TSN.

A transmitter 8 receives the data packets from the TSN generators 6, and multiplexes the data packets into the same transport channel for transmission by one or more antennas At over the medium 12.

At the user equipment 14, the data packets are received by a receiver 16 via one or more receive antennas Ar, and output to a parser 18. The parser 18 examines the PCI of the received data packets, and parses the received data packets into one of N buffers 20.

A buffer 20 is provided for and associated with a different one of the N priority classes; hence, N buffers 20 are provided. For example, the parser 18 outputs data packets having a PCI of 1 to the buffer 20 associated with priority class 1, outputs data packets having a PCI of 2 to the buffer 20 having a priority class of 2, etc.

Control logic 22 for the user equipment 14 examines the TSNs of the data packets in each buffer 20 and causes each buffer 20 to output the data packets stored therein in order based on the TSNs of the data packets. Specifically, the control logic 22 includes a counter 24 associated with each buffer 20. After a buffer 20 has been loaded with a predetermined number of data packets, the counter 24 associated with that buffer 20 is initialized to a value equal to the lowest TSN of the data packets in the buffer 20. The control logic 22 instructs each buffer 20 to output a data packet having the same TSN as the value of the associated counter 24. After the buffer 20 outputs a data packet, the counter 24 is incremented by the same amount that the TSN generator 6 increments the TSN. When the counter 24 is initialized or after the counter 24 is incremented, the control logic 22 starts or resets a count down timer (e.g., 10 seconds) 11 associated with the counter 24 (and thus the buffer 20 and priority class of that buffer 20). If the count down timer 11 expires before the associated buffer 20 receives a data packet having a TSN equal to the count value of the counter 24, the counter 24 is incremented. The comparing, incrementing and outputting operations are continuously repeated. In this manner, even though data packets are received out of order by the user equipment 14, the data packets are sent to the next, upper layer of system processing in sequence. For example, the buffer 20 for the PCI of 1 will output the data packets having TSNs of 1 and 2, but will not output a data packet having a TSN of 4 until after a data packet have a PCI of 1 and a TSN of 3 is received and output by the buffer 20.

As will be understood by those skilled in the art, Fig. 1 is a logical block diagram, and the elements illustrated therein are implemented by a programmed microprocessor and associated memory, hardware, firmware and/or a combination thereof. For example, the buffers 4 in one embodiment are registers, and in another embodiment are portions of a random access memory.

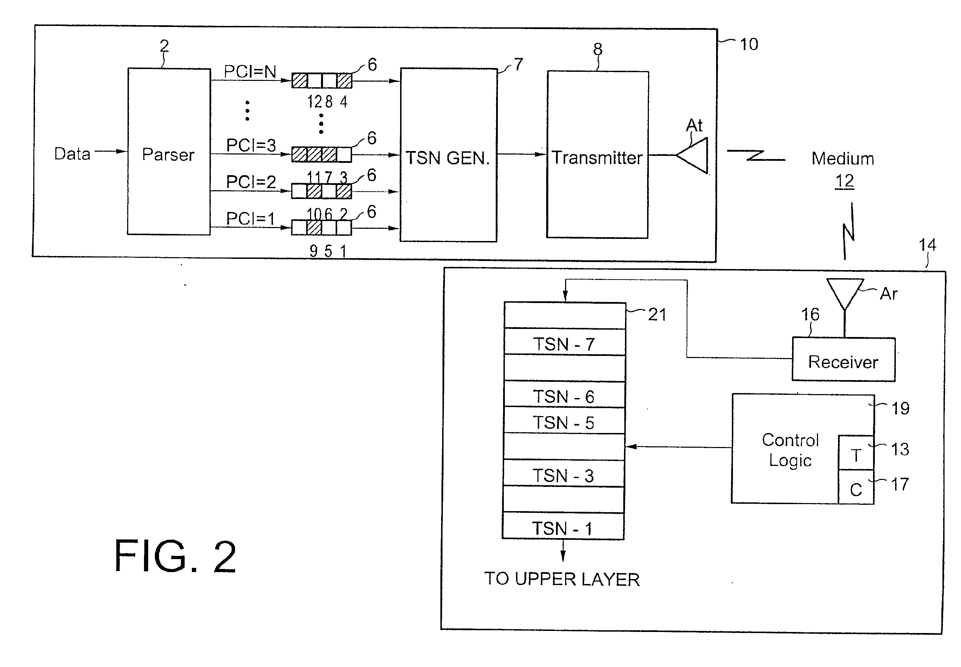

Fig. 2 illustrates a logical block diagram of a transmit and receive system employing a re-sequencing methodology according to a second embodiment of the present invention. As shown, a base station 10 transmits data packets over a medium 12 to user equipment 14. The base station 10 includes a parser 2 that receives data packets for transmission from other base station circuitry, not shown for the sake of brevity and clarity. The data packets represent one or more logical channels, and have been assigned a priority class. Specifically, each data packet includes a priority class indicator (PCI) indicating the priority class (1 through N) of the data packet. In one embodiment, the PCI is disposed in a header portion of the data packet.

The parser 2 parses the data packets into one of N buffers 4 based on the PCI of the data packet. A buffer 4 is provided for, and associated with, a different one of the N priority classes; hence, N buffers 4 are provided. For example, the parser 2 outputs data packets having a PCI of 1 to the buffer 4 associated with priority class 1, outputs data packets having a PCI of 2 to the buffer 4 having a priority class of 2, etc.

A single transmission sequence number (TSN) generator 7 receives the data packets from each of the buffers 4 and assigns only a single sequence of TSNs to the data packets, regardless of priority class. The numerals beneath the memory locations of the buffers 4 represent the TSNs that are later assigned to the data packets in those memory locations.

A transmitter 8 receives the data packets from the TSN generator 7, and multiplexes the data packets into the same transport channel for transmission by one or more antennas At over the medium 12.

At the user equipment 14, the data packets are received by a receiver 16 via one or more receive antennas Ar, and output to a single buffer 21, which stores the received data packets - regardless of priority class. The control logic 19 in the user equipment 14 causes the buffer 21 to output data packets in sequence based on their TSN. Specifically, the control logic 19 includes a counter 17. After the buffer 21 has been loaded with a predetermined number of data packets, the counter 17 is initialized to a value equal to the lowest TSN of the data packets in the buffer 21. The control logic 19 instructs the buffer 21 to output a data packet having the same TSN as the value of the counter 17. After the buffer 21 outputs a data packet, the counter 17 is incremented by the same amount that the TSN generator 7 increments the TSN. When the counter 17 is initialized or after the counter 17 is incremented, the control logic 19 starts or resets a count down timer (e.g., 10 seconds) 13 associated with the counter 17. If the count down timer 13 expires before the buffer 21 receives a data packet having a TSN equal to the count value of the counter 17, the counter 17 is incremented. The comparing, incrementing and outputting operations continuously repeat. In this manner, even though data packets are received out of order by the user equipment 14, the data packets are sent to the next, upper layer of system processing in sequence.

This embodiment eliminates the need for multiple buffers. Depending on the application environment, eliminating the use of multiple buffers can prove beneficial. If one or more of the priority classes is seldom used, then having a buffer for each priority class results in wasted buffer space. However, having a single buffer as in the second embodiment creates the possibility of decreased throughput to the upper layer. For example, as shown in Fig. 2, the first data packet having a PCI of 2 is assigned a TSN of 2. Because this data packet is missing on the receive side (e.g., has not yet been received by the user equipment 14), the buffer 21 will not output the data packets having TSNs of 3 or greater. Consequently, even though the first data packet having a PCI of 3 does not require that the first data packet having a PCI of 2 output before it, the data packet having a PCI of 3 will not be output from the buffer 21 because the first data packet having a PCI of 2 is missing.

As will be understood by those skilled in the art, Fig. 2 is a logical block diagram, and the elements illustrated therein are implemented by a programmed microprocessor and associated memory, hardware, firmware and/or a combination thereof. For example, the buffers 4 in one embodiment are registers, and in another embodiment are portions of a random access memory.

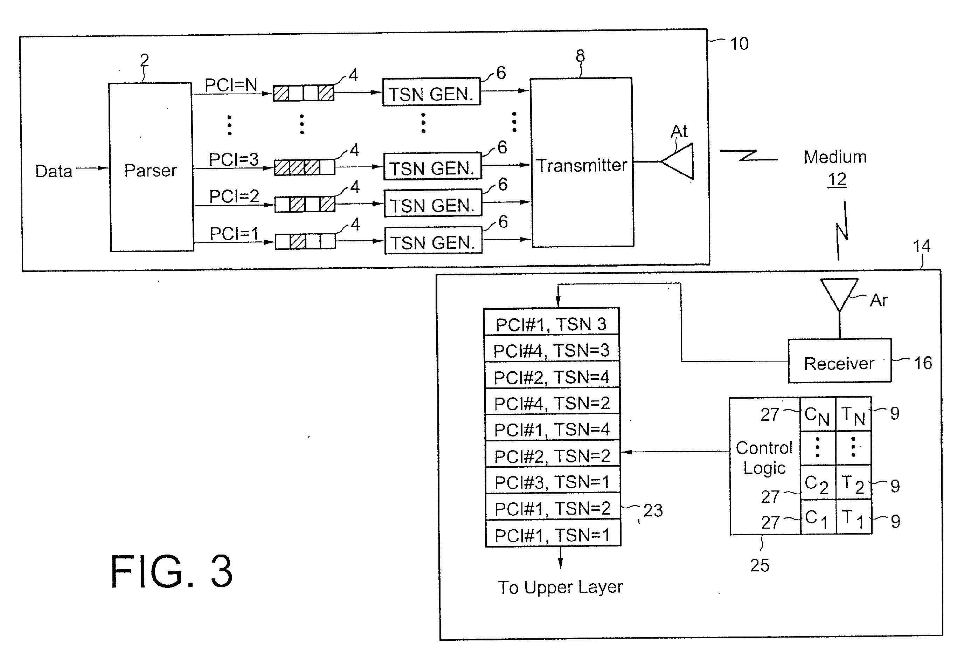

Fig. 3 illustrates a logical block diagram of a transmit and receive system employing a re-sequencing methodology according to a third embodiment of the present invention. As shown, a base station 10 transmits data packets over a medium 12 to user equipment 14. The base station 10 includes a parser 2 that receives data packets for transmission from other base station circuitry, not shown for the sake of brevity and clarity. The data packets represent one or more logical channels, and have been assigned a priority class. Specifically, each data packet includes a priority class indicator (PCI) indicating the priority class (1 through N) of the data packet. In one embodiment, the PCI is disposed in a header portion of the data packet.

The parser 2 parses the data packets into one of N buffers 4 based on the PCI of the data packet. A buffer 4 is provided for, and associated with, a different one of the N priority classes; hence, N buffers 4 are provided. For example, the parser 2 outputs data packets having a PCI of 1 to the buffer 4 associated with priority class 1, outputs data packets having a PCI of 2 to the buffer 4 having a priority class of 2, etc.

A transmission sequence number (TSN) generator 6 is associated with each one of the buffers 4; accordingly, there are N TSN generators. Each TSN generator 6 receives the data packets output from the associated buffer 4, and assigns a TSN to the data packet. Specifically, the TSN is disposed in a predetermined position in the data packet. For example, in one embodiment, the TSN forms part of the header for the data packet.

After assigning a TSN to a data packet, the TSN generator 6 increments the TSN, and this new TSN value will be assigned to the next, received data packet. In a preferred embodiment, the TSN generators 6 begin by assigning a TSN of 1, and increment the TSN by 1.

Because a TSN generator 6 is associated with each buffer 4, the data packets of a particular priority class have TSNs that are independent of the TSNs assigned to data packets of other priority classes. As a result, two data packets of different classes can have the same TSN.

A transmitter 8 receives the data packets from the TSN generators 6, and multiplexes the data packets into the same transport channel for transmission by one or more antennas At over the medium 12.

At the user equipment 14, the data packets are received by a receiver 16 via one or more receive antennas Ar, and output to a single buffer 23, which stores the data packets. In a preferred embodiment, the buffer 23 is a random access memory. Control logic 25 in the user equipment 14 causes the buffer 23 to output data packets based on the PCI and TSN of the data packets. Specifically, the control logic 25 includes a counter 27 associated with each priority class. Accordingly, there are N counters 27. After the buffer 23 has been loaded with a predetermined number of data packets, the control logic 25 examines the TSNs of the data packets for priority class 1 and initializes the counter 27 associated with that priority class to a value equal to the lowest TSN of the data packets having a PCI of 1 in the buffer 23. This process is then repeated for each priority class.

Next, the control logic 25 instructs the buffer 23 to a output data packet having a PCI of 1 and the same TSN as the value of the counter 27 for priority class 1. After the buffer 23 outputs such a data packet, the counter 27 is incremented by the same amount that the TSN generator 6 for the priority class of 1 increments the TSN. The comparison, output and increment process is then repeated for other data packets having a priority class of 1.

Furthermore, the same comparison, output and increment process is performed for data packets in the other priority classes using their associated counters 27. Additionally, when a counter 27 is initialized or after the counter 27 is incremented, the control logic 25 starts or resets a count down timer (e.g., 10 seconds) 9 associated with the counter 27. If the count down timer 9 expires before the buffer 25 receives a data packet having a TSN equal to the count value of the counter 27 for that priority class, the counter 27 is incremented. In this manner, even though data packets are received out of order by the user equipment 14, the data packets are sent to the next, upper layer of system processing in sequence.

For example, referring to Fig. 3, the buffer 23 will output the first, second, third and fourth data packets having a PCI of 1, and will output the first data packet having a PCI of 3. But will not output the other data packets shown stored in the buffer 22. Namely, the absence of data packets of other priority classes will not prevent the output of data packets of a priority class that are already received.

Accordingly, this embodiment of the present invention eliminates the possible waste of resources that can occur when using multiple buffers as in the first embodiment, but does not suffer from possible throughput problems that occur when using a single buffer as in the second embodiment. In addition, the sharing of a central buffer to perform the re-sequencing function among the different priority classes allows different memory allocation size to different priority classes and provides another quality of service control for the different priority classes.

As will be understood by those skilled in the art, Fig. 3 is a logical block diagram, and the elements illustrated therein are implemented by a programmed microprocessor and associated memory, hardware, firmware and/or a combination thereof. For example, the buffers 4 in one embodiment are registers, and in another embodiment are portions of a random access memory.

The invention being thus described, it will be obvious that the same may be varied in many ways within the scope of the following claims.

## Claims

1. A multi-priority re-sequencing method, comprising:
receiving data packets, each data packet having a priority indicator and a transmission sequence number, the priority indicator indicating a priority class of the data packet, and the transmission sequence number indicating a sequence of transmission for data packets of a same priority class; and
storing the data packets in buffers based on the priority indicators, each buffer associated with a different priority class; and
outputting the data packets in each buffer in sequence of transmission based on the transmission sequence number of the data packets.

2. A multi-priority re-sequencing method, comprising:
receiving data packets, each data packet having a priority indicator and a transmission sequence number, the priority indicator indicating a priority class of the data packet, and the transmission sequence number indicating a sequence of transmission for the data packets; and
storing the data packets in a single buffer; and
outputting the data packets from the buffer in sequence of transmission based on the transmission sequence number of the data packets.

3. The method of claim 2, wherein the transmission sequence numbers are not associated with the priority class of the data packets.

4. A multi-priority re-sequencing method, comprising:
receiving data packets, each data packet having a priority indicator and a transmission sequence number, the priority indicator indicating a priority class of the data packet, and the transmission sequence number indicating a sequence of transmission for data packets of a same priority class; and
storing the data packets in a single buffer; and
outputting the data packets from the buffer in sequence of transmission based on the transmission sequence number and the priority indicator of the data packets.

5. The method of claim 4, wherein the outputting step outputs the data packets of the same priority class in sequence of transmission regardless of the transmission sequence numbers of the data packets of other priority classes.

6. A multi-priority re-sequencing apparatus, comprising:
a receiver receiving data packets, each data packet having a priority indicator and a transmission sequence number, the priority indicator indicating a priority class of the data packet, and the transmission sequence number indicating a sequence of transmission for data packets of a same priority class; and
a buffer associated with each priority class;
a parser parsing the received data packets into one of the buffers based on the priority class indicator of the received data packets; and
control logic instructing the buffers to output data packets in sequence based on the transmission sequence numbers of the data packets stored therein.

7. A multi-priority re-sequencing apparatus, comprising:
a receiver receiving data packets, each data packet having a priority indicator and a transmission sequence number, the priority indicator indicating a priority class of the data packet, and the transmission sequence number indicating a sequence of transmission for the data packets; and
a single buffer storing the data packets; and
control logic instructing the buffer to output the data packets in sequence based on the transmission sequence numbers of the data packets.

8. The apparatus of claim 7, wherein the transmission sequence numbers are not associated with the priority class of the data packets.

9. A multi-priority re-sequencing apparatus, comprising:
a receiver receiving data packets, each data packet having a priority indicator and a transmission sequence number, the priority indicator indicating a priority class of the data packet, and the transmission sequence number indicating a sequence of transmission for data packets of a same priority class; and
a single buffer storing the received data packets; and
control logic instructing the buffer to output the data packets in sequence based on the transmission sequence number and the priority indicator of the data packets.

10. The apparatus of claim 9, wherein the control logic instructs the buffer to output the data packets of the same priority class in sequence regardless of the transmission sequence numbers of the data packets of other priority classes.
